# EUROPÄISCHE PATENTSCHRIFT

(11) **EP 0 808 343 B1**
(45) Veröffentlichungstag und Bekanntmachung des Hinweises auf die Patenterteilung: **26.05.1999**
(21) Anmeldenummer: 96902250.8
(22) Anmeldetag: 25.01.1996
(51) Int. Cl.: C09B 43/44, C09B 62/006, C09B 62/26, C09B 62/507

(54) **VERFAHREN ZUR HERSTELLUNG VON REAKTIVAZOFARBSTOFFEN**
PROCESS FOR PREPARING REACTIVE AZO DYES
PROCEDE DE PREPARATION DE COLORANTS AZOIQUES REACTIFS

(30) Priorität: 07.02.1995 DE 19503889; 27.07.1995 DE 19527438
(43) Veröffentlichungstag der Anmeldung: 26.11.1997
(73) Patentinhaber: BAYER AG, 51368 Leverkusen (DE)
(72) Erfinder: KUNDE, Klaus, D-53819 Neunkirchen-Seelscheid (DE)
(86) Internationale Anmeldenummer: EP9600296
(87) Internationale Veröffentlichungsnummer: WO9624637

(56) Entgegenhaltungen:
- EP-A- 0 090 114
- EP-A- 0 406 629
- DE-A- 1 934 123
- GB-A- 2 103 232

## Beschreibung

Die vorliegende Erfindung betrifft ein Verfahren zur Herstellung von Reaktivazofarbstoffen, ausgehend von maleinylierten Aminoazoverbindungen.

Die Selektivität der Kupplung bei der Herstellung von Azofarbstoffen kann beispielsweise durch Parameter wie der Temperatur sowie dem pH-Wert gesteuert werden (vgl. US-A 5 350 838). In DE-A 32 17 224 (US-A 4 841 027) wird eine bestimmte Orientierung bei der Kupplung dadurch erreicht, daß man die Aminogruppe von Naphthalinsulfonsäure-Kupplungskomponenten vor der Kupplung mit einem Anhydrid einer zweibasigen Säure, wie Maleinsäureanhydrid acyliert. Die so acylierten Aminoazoverbindungen werden dann hydrolisiert und zwischenisoliert, bevor sie mit Reaktivkomponenten weiter zu Reaktivfarbstoffen umgesetzt werden.

Es wurde nun ein Verfahren zur Herstellung von Reaktivazofarbstoffen gefunden, die in Form ihrer freien Säure der Formel (I) entsprechen 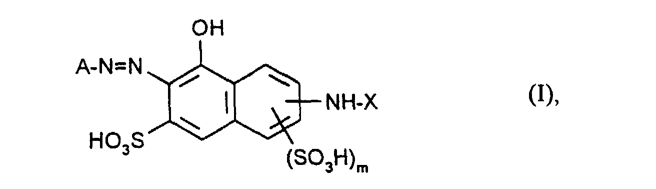 worin
- m: 0 oder 1 bedeutet,
- A: den Rest einer Diazokomponente, insbesondere aus der Benzol- oder Naphthalinreihe, bedeutet und
- X: einen faserreaktiven heterocyclischen Rest bedeutet,
das dadurch gekennzeichnet ist, daß man maleinylierte Aminoazofarbstoffe der Formel (IV) 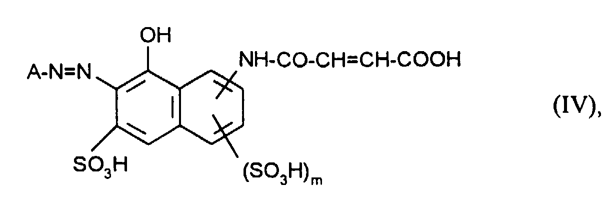 worin
- A und m: die obengenannte Bedeutung haben,
verseift und die dabei erhaltene Verbindung ohne Zwischenisolierung, mit einer Reaktivkomponente der Formel (VI)

X-Hal (VI)

umsetzt, wobei
- X: die oben angegebene Bedeutung besitzt und
- Hal: für Halogen, insbesondere Cl oder F, steht.

In einer bevorzugten Verfahrensausführung werden Reaktivazofarbstoffe der Formel (I) hergestellt, worin A ein Benzolderivat der allgemeinen Formel (II) 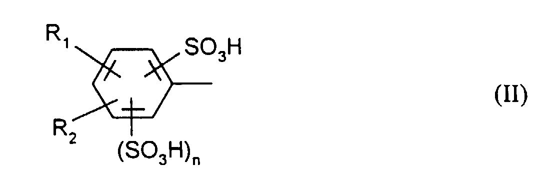 oder ein Naphthalinderivat der allgemeinen Formel (III) bedeutet, 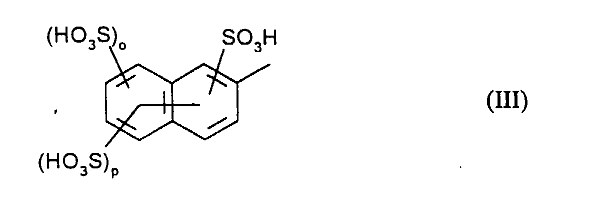 worin
- R₁ und R₂: unabhängig voneinander für Wasserstoff, Halogen, C₁-C₄-Alkyl, C₁-C₄-Alkoxy, gegebenenfalls durch Substituenten wie Halogen, insbesondere F, Cl oder Br, C₁-C₄-Alkyl, C₁-C₄-Alkoxy oder SO₃H, substituiertes Arylazo, insbesondere Sulfophenylazo stehen.
- n, o und p: unabhängig voneinander für 0 oder 1 stehen.

In einer bevorzugten Ausführungsform des erfindungsgemäßen Verfahrens werden Verbindungen der Formel (I) hergestellt, worin
- R₁ und R₂: unabhängig voneinander für Wasserstoff, Chlor, Fluor, Methyl, Ethyl, Methoxy, Ethoxy oder 4-Sulfophenylazo stehen.

Die bei der Verseifung des maleinylierten Aminoazofarbstoffe der Formel (IV) erhaltene Verbindung entspricht vermutlich der Formel (V) 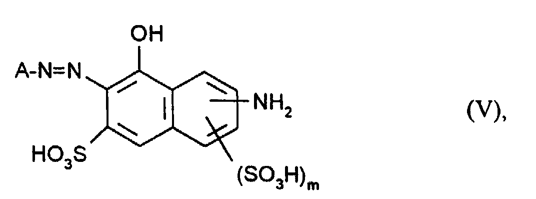 worin
- A und m: die oben angegebene breiteste Bedeutung besitzen.

In einer besonderen Ausführungsform des erfindungsgemäßen Verfahrens werden solche Verbindungen der Formel (I) hergestellt, worin
- A: ein Benzolderivat der Formel (II) bedeutet, das der Formel (VII) entspricht 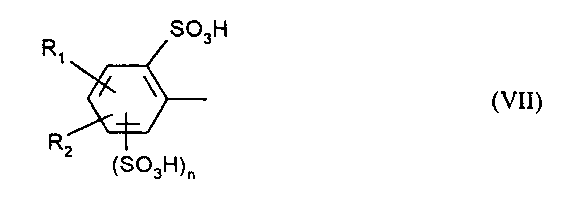
oder ein Naphthalinderivat der Formel (III) bedeutet, das der Formel (VIII) entspricht 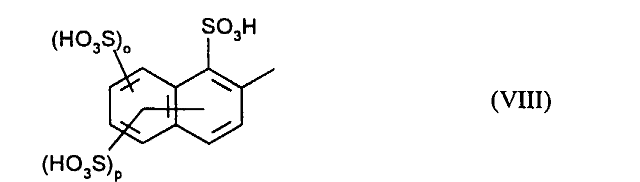 und R₁, R₂, n, o oder p die oben angegebene Bedeutung besitzen.

Ganz besonders bevorzugt ist das erfindungsgemäße Verfahren, worin Verbindungen der Formel (IV) der Formel (IX) oder (X) entsprechen 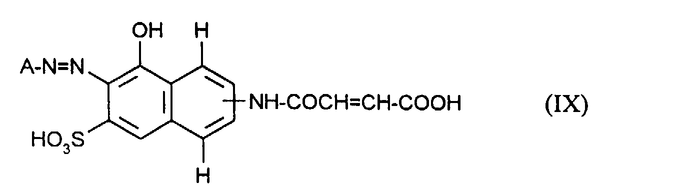 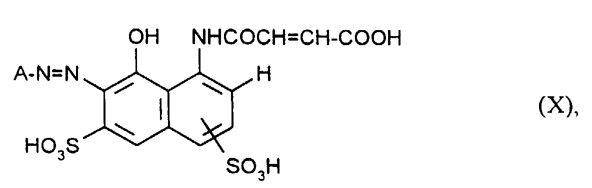 worin
- A: die oben angegebene breiteste Bedeutung besitzt.

Dabei erfolgt die Verseifung im allgemeinen in wäßrig-alkalischer Lösung, vorzugsweise bei pH-Werten ≥10 und Temperaturen von 60° bis 105°C; als Basen finden Alkali- oder Erdalkalihydroxide Verwendung, vorzugsweise Natriumhydroxid, Kaliumhydroxid, Lithiumhydroxid.

Von größerer Bedeutung ist allerdings die Verseifung in wäßrig-saurer Lösung, vorzugsweise bei pH-Werten ≤4 und Temperaturen von 60° bis 105°C; als Säuren finden insbesondere Mineralsäuren Verwendung, vorzugsweise Salzsäure und Schwefelsäure. Weitere Verfahrensparameter zur Verseifung finden sich beispielsweise in DE-A 3 217 224.

Geeignete faserreaktive heterocyclische Reste X, d.h. solche die mit den OH- oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatisch-heterocyclischen Ring gebunden enthalten, beispielsweise an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, beispielsweise ein Chinolin-, Phthalazin-, Cinnolin-, Chinazolin-, Chinoxalin-, Acridin-, Phenazin- und Phenanthridin-Ring-System.

Besonders geeignet sind dabei faserreaktive Reste aus der Reihe der Pyrimidine oder der Triazine.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido-(N₃), Rhodanido, Thiolether, Oxiether, Sulfinsäure und Sulfonsäure.

Insbesondere kann X demnach stehen für einen Rest der Formel 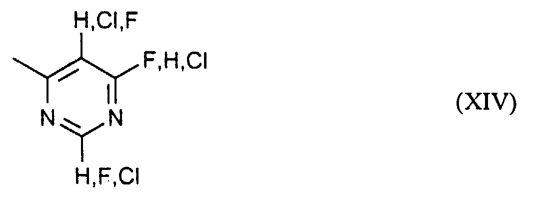 oder für einen Rest der Formel 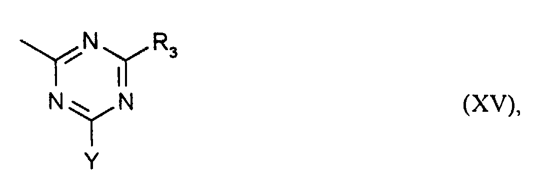 worin
- Y: für Cl oder F steht und
- R₃: für F oder Cl steht oder einen Rest eines aliphatischen oder aromatischen Amins bedeutet, der gegebenenfalls eine weitere Aminofunktion oder einen Rest der Formel -SO₂-C₂H₄-OSO₃H oder -SO₂CH=CH₂ enthält.

Beispielhaft können als faserreaktive Reste X-Hal genannt werden 2,4,6-Trichlor-1,3,5-triazin, 2,4,6-Trifluor-1,3,5-triazin, 2,4,6-Trifluor-5-chlorpyrimidin, 2,4,6-Trifluorpyrimidin, 4,6-Difluor-5-chlorpyrimidin, 4,5,6-Trifluorpyrimidin, die Verbindungen der Formeln 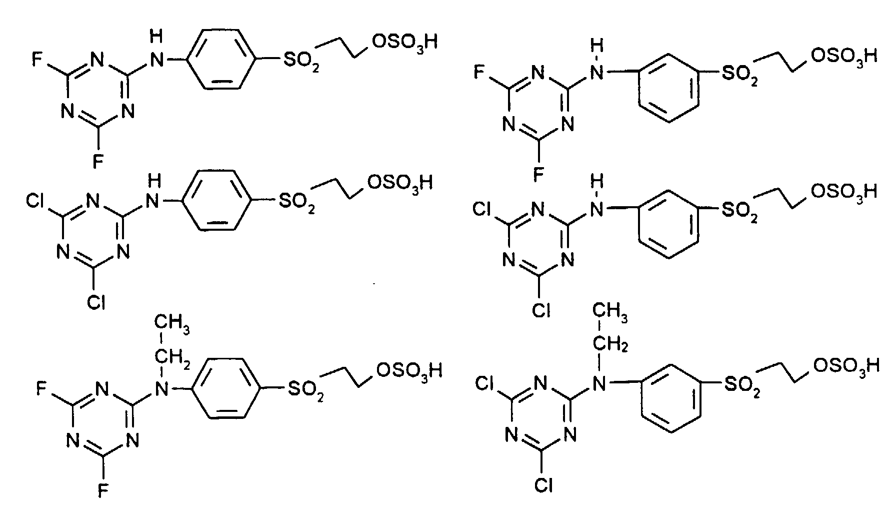 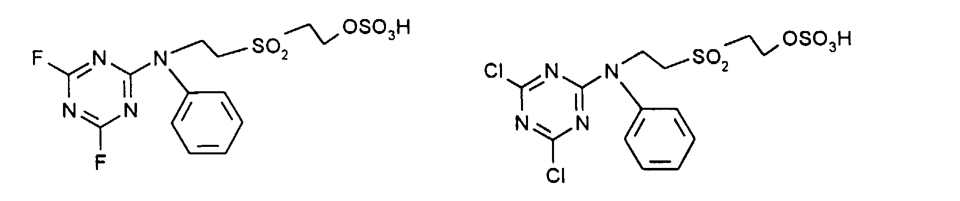 die beispielsweise aus EP-A 87 113 bekannt sind.

In einer besonderen Ausführungsform des erfindungsgemäßen Verfahrens werden Farbstoffe der Formel (I), worin X einen Rest der Formel (XV) bedeutet, in der R₃ für gegebenenfalls substituiertes aliphatisches oder aromatisches Amino steht, durch Umsetzung von Verbindungen der Formel (1), worin R₃ für Cl oder F steht, mit einem aliphatischen oder aromatischen Amin HR₃, das gegebenenfalls eine weitere Aminofunktion oder einen Rest der Formel SO₂C₂H₄OSO₃H oder -SO₂CH=CH₂ enthält, erhalten.

Als Amine der Formel HR₃ sind beispielsweise zu nennen:

Ammoniak, Morpholin, Anilin, N-Methylanilin, N-Ethylanilin, o-Toluidin, Orthanilsäure, Metanilsäure, Sulfanilsäure, 1,3-Diaminobenzol, 1,4-Diaminobenzol, 2,5-Diaminobenzolsulfonsäure, 2,4-Diaminobenzolsulfonsäure, 2,2'-Benzidin-disulfonsäure, 1,2-Diaminoethan, 1,3-Diaminopropan, 1,2-Diaminopropan, 4-Aminophenyl-β-sulfatoethylsulfon, 3-Aminophenyl-β-sulfatoethylsulfon, 2-Phenylaminoethyl-2'-sulfatoethylsulfon, 2-Methylaminoethyl-2'-sulfatoethylsulfon, 3-Ethylaminophenyl-1-sulfatoethylsulfon, Taurin, N-Methyltaurin.

Die Verfahrensbedingungen sind beispielsweise in EP-A 622 424 beschrieben. Dabei erfolgt die Umsetzung des Amins HR₃ vorzugsweise ohne vorher den entsprechenden Triazinfarbstoff isoliert zu haben.

Die bevorzugten noch mit HR₃ zu kondensierenden Triazinfarbstoffe werden nach dem erfindungsgemäßen Verfahren erhalten, wobei X-Hal Cyanurchlorid oder Cyanurfluorid bedeutet.

Die nach dem erfindungsgemäßen Verfahren erhaltenen Farbstoffe der Formel I, worin X einen Rest der Formel XV bedeutet, in der R₃ für F oder Cl steht und Y, A und m die oben angegebene Bedeutung besitzen können, werden vorzugsweise, sofern sie mit Diaminen, wie sie beispielsweise für HR₃ genannt sind, umgesetzt werden, verdoppelt.

Diese Farbstoffe entsprechen der Formel 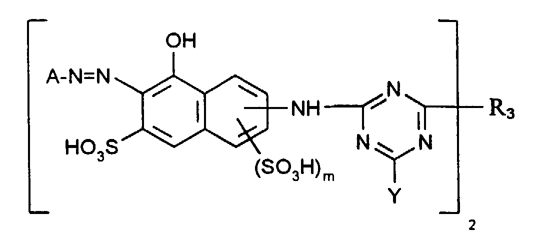 worin R₃ ein bivalenter Diaminorest ist.

Eine bevorzugte Ausführungsform des erfindungsgemäßen Verfahrens ist dadurch gekennzeichnet, daß man die Verbindungen der Formel (IV) dadurch erhält, daß man Verbindungen der Formel (XI) oder (XII) 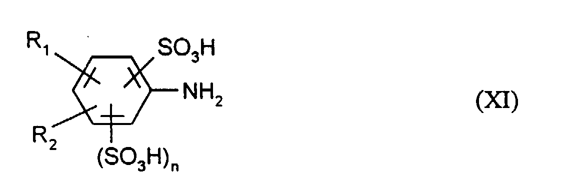 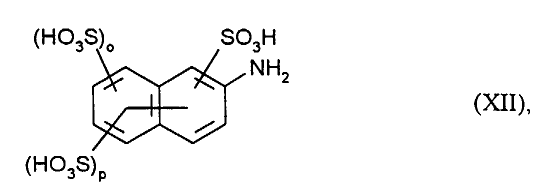 worin
R₁, R₂, n, o und p die oben angegebene breiteste Bedeutung besitzen,
diazotiert und auf Verbindungen der Formel (XIII) kuppelt 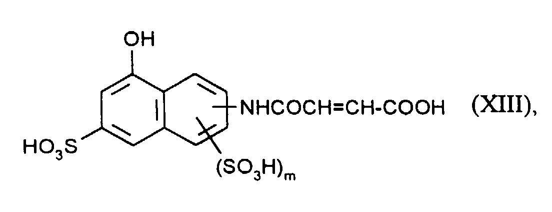 worin
- m: die oben angegebene breiteste Bedeutung besitzt.

Verbindungen der Formel (XIII) sind aus DE-A 3 217 224 bekannt und können wie dort beschrieben hergestellt werden.

In einer besonderen Ausführungsform des erfindungsgemäßen Herstellungsverfahrens werden Verbindungen der Formel (XI) oder (XII), die der Formel (XIa) oder (XIIa) entsprechen 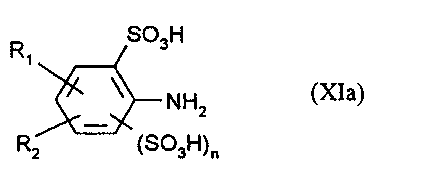 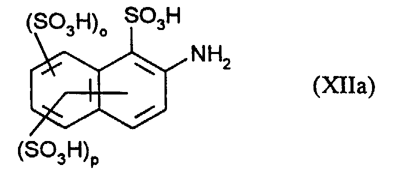 diazotiert, worin
R₁, R₂, n, o und p die oben genannte breiteste Bedeutung haben.

Aminobenzolsulfonsäuren der allgemeinen Formel (XI) sind z.B. Orthanilsäure, Metanilsäure, Sulfanilsäure, 2-Amino-4-methylbenzolsulfonsäure, 2-Amino-4-methoxybenzolsulfonsäure, 2-Amino-4-ethoxybenzolsulfonsäure, 4-Amino-3-methoxybenzolsulfonsäure, 4-Amino-3-methylbenzolsulfonsäure, 4-Amino-5-methoxy-2-methylbenzolsulfonsäure, 2-Amino-1,4-benzoldisulfonsaure, 4-Amino-1,3-benzoldisulfonsäure, 2-Amino-5-methyl-1,4-benzoldisulfonsäure, 2-Amino-5-methoxy-1,4-benzoldisulfonsäure, 5-(4-Sulfophenylazo)-2-aminobenzolsulfonsäure.

Aminonaphthalinsulfonsäuren der allgemeinen Formel (XII) sind z.B. 2-Amino-1-naphthalinsulfonsäure, 2-Amino-1,5-naphthalindisulfonsäure, 2-Amino-1,5.7-naphthalintrisulfonsäure, 3-Amino-2,5,7-naphthalintrisulfonsäure, 3-Amino-1,5-naphthalindisulfonsäure, 3-Amino-1,5,7-naphthalintrisulfonsäure.

Aminonaphtholsulfonsäurederivate der allgemeinen Formel (XIII) erhält man beispielsweise durch Umsetzung von Maleinsäureanhydrid mit z.B. 4-Amino-5-hydroxy-2,7-naphthalindisulfonsäure, 4-Amino-5-hydroxy-1,7-naphthalindisulfonsäure, 6-Amino-4-hydroxy-2-naphthalinsulfonsäure, 7-Amino-4-hydroxy-2-naphthalinsulfonsäure; die Umsetzung ist z.B. in DE-A-33 16 984, DE-A-31 18 657 und in EP-A 90 114 beschrieben.

Die Diazotierung der Aminobenzolderivate der allgemeinen Formel (XI) bzw. der Aminonaphthalinderivate der allgemeinen Formel (XII) erfolgt nach an sich bekannten Verfahren durch Einwirken von mindestens einem Mol-Äquivalent Natriumnitrit in Gegenwart von mindestens zwei Mol-Äquivalenten einer starken Säure.

Die Kupplung der so erhaltenen Diazoniumverbindungen auf Aminonaphtholderivate der allgemeinen Formel (XIII) erfolgt in an sich bekannter Weise in wäßrigen Medien, vorzugsweise in Gegenwart von säurebindenden Mitteln wie z.B. Natriumhydrogencarbonat, Natriumcarbonat, Natriumhydroxid, Kaliumcarbonat, Kaliumhydroxid, Lithiumcarbonat, Lithiumhydroxid bei pH-Werten zwischen 3 und 10, vorzugsweise zwischen 4 und 8 bei Temperaturen zwischen -5°C und 30°C.

Die angegebenen Formeln sind die der freien Säure. Bei der Herstellung werden im allgemeinen die Salze erhalten, insbesondere die Alkalisalze wie Natrium-, Kalium- oder Lithiumsalze.

Die so hergestellten Reaktivfarbstoffe eignen sich hervorragend zum Färben und Bedrucken von natürlichen oder synthetischen hydroxy- oder amidgruppenhaltigen Substraten, wie Seide, Leder, Wolle, synthetischen Polyamidfasern, insbesondere aber cellulosehaltige Materialien faseriger Struktur wie Leinen, Zellstoff, regenerierte Zellulose und vor allem Baumwolle.

### Beispiel 1

31,9 g H-Säure (1-Amino-8-hydroxy-naphthalin-3,6-disulfonsäure) wurden in Wasser unter Schutzgas neutral bei einer Temperatur von 20°C gelöst. 14,7 g Maleinsäureanhydrid wurden zugegeben. Man ließ den pH-Wert auf 4,5 abfallen und behielt diesen mit Soda-Lösung konstant; die Temperatur wurde durch Außenkühlung gehalten.

30,3 g 2-Amino-1,5-naphthalindisulfonsäure wurden in Wasser bei einer Temperatur von 0°C unter Zusatz von soviel Salzsäure gelöst, daß nach Zugabe von 6,9 g Natriumnitrit ein pH-Wert von 1,5 nicht überschritten war; die Temperatur wurde durch Außenkühlung gehalten. Nach Beendigung der Diazotierung wurde ein eventueller Nitrit-Überschuß mit Amidosulfonsäure zerstört. Die Suspension des Diazoniumsalzes wurde nach Beendigung der Acylierung der H-Säure langsam zur Suspension der N-Maleinyl-H-Säure zugetropft. Dabei wurde der pH-Wert der Kupplungsmischung mit Soda-Lösung auf 6,5 angehoben und während der Kupplung gehalten; die Temperatur wurde durch Außenkühlung bei 20°C gehalten.

Man erhielt eine Lösung, die das Produkt der Formel (1) 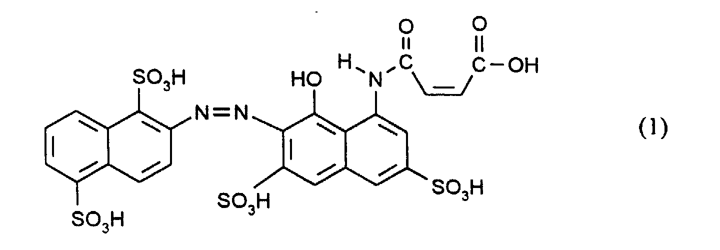 in einer Ausbeute von 95 % der Theorie enthielt.

### Beispiel 2

Verwendete man anstatt der in Beispiel 1 eingesetzten H-Säure eine äquimolare Menge 3-Amino-8-hydroxy-naphthalin-6-sulfonsäure (I-Säure), so erhielt man die Verbindung der Formel (2) 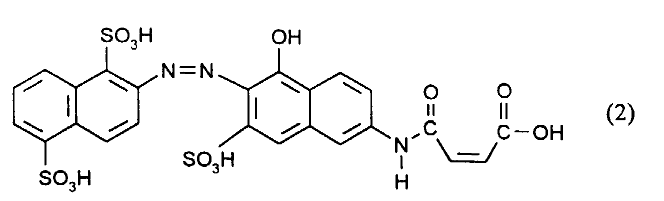 in einer Ausbeute von 90 % der Theorie.

### Beispiele 3 und 4

Verwendete man anstatt der in Beispiel 1 eingesetzten 2-Amino-1,5-naphthalindisulfonsäure äquimolare Mengen 2-Amino-1-naphthalinsulfonsäure bzw. Orthanilsäure, so erhielt man die Verbindungen der Formeln (3) und (4) 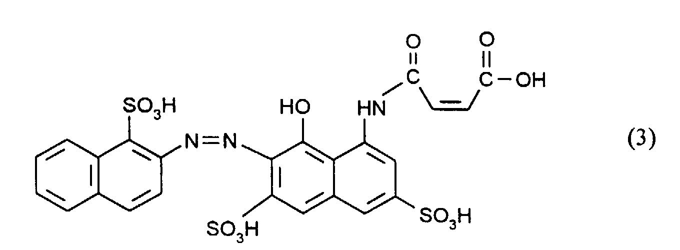 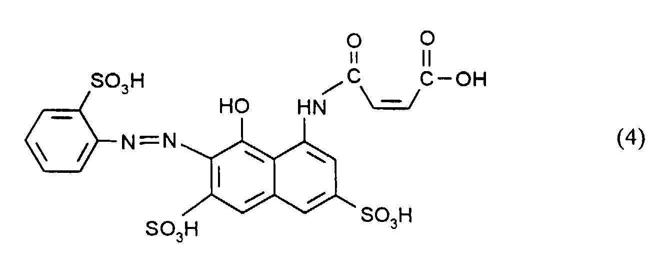 in Ausbeuten von jeweils 92 % der Theorie.

### Beispiele 5, 6 und 7

Verwendete man anstatt der in Beispiel 2 eingesetzten 2-Amino-1,5-naphthalindisulfonsäure äquimolare Mengen 2-Amino-5-methylbenzolsulfonsäure, 2-Amino-5-methoxybenzol sulfonsäure oder 2-Amino-5-(4'-sulfophenylazo)benzolsulfonsäure, so erhielt man die Verbindungen der Formeln (5), (6) und (7)

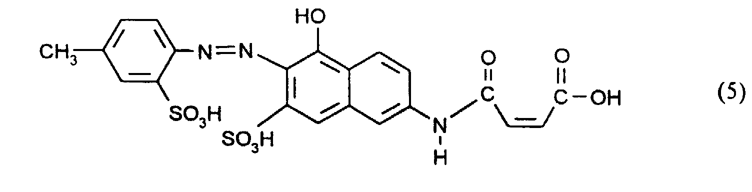

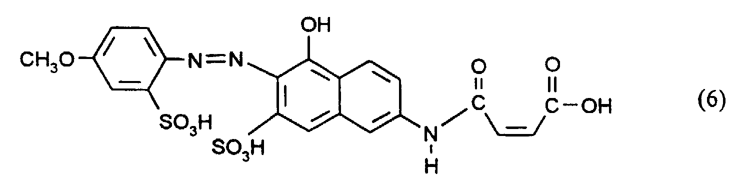

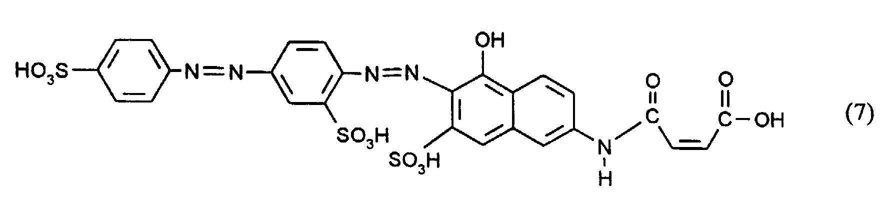

### Verwendungsbeispiel

Der pH-Wert der in Beispiel 1 erhaltenen Lösung des Produktes der Formel (1) wurde mit Salzsäure auf 1,4 gebracht, dann wurde 45 Minuten lang bei 70°C gerührt, wobei der Maleinylrest abgespalten wurde. Die Lösung wurde auf 20°C abgekühlt. Der pH-Wert wurde mit Sodalösung auf 3,7 gebracht. Nach Zugabe von 19,6 g Cyanurchlorid wurde der pH-Wert mit Sodalösung und die Temperatur durch Außenkühlung konstant gehalten. Nach Beendigung der Kondensation wurden 6,1 g 1,4-Diaminobenzol in Wasser mit Salzsäure bei pH 6 gelöst und zur oben erhaltenen Suspension zugegeben. Der Ansatz wurde auf 30°C erwärmt, der pH-Wert wurde mit Sodalösung auf 6,5 gebracht und bis zur Beendigung der Umsetzung gehalten. Zum Schluß wurde der pH-Wert mit Sodalösung auf 8 gebracht, dann wurde die Farbstofflösung unter vermindertem Druck zur Trockene eingeengt. Man erhielt 160 g eines dunkelroten Pulvers, das den Farbstoff der Formel (8) enthielt. 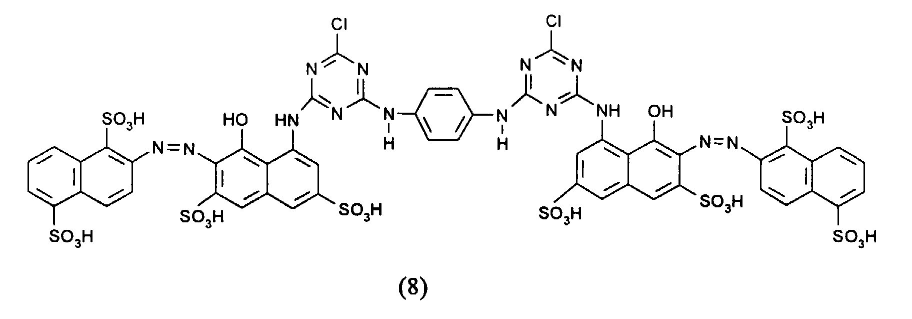 In der folgenden Tabelle sind weitere Farbstoffe aufgeführt, die unter Verwendung der Kupplungsprodukte aus den Beispielen 1 bis 7 nach Hydrolyse zu den entsprechenden Aminoazoverbindungen durch Umsetzung mit 2,4,6-Trifluor-1,3,5-triazin (TFT) oder 2,4,6-Trichlor-1,3,5-triazin (TCT) und dem angegebenen Amin erhalten wurden.

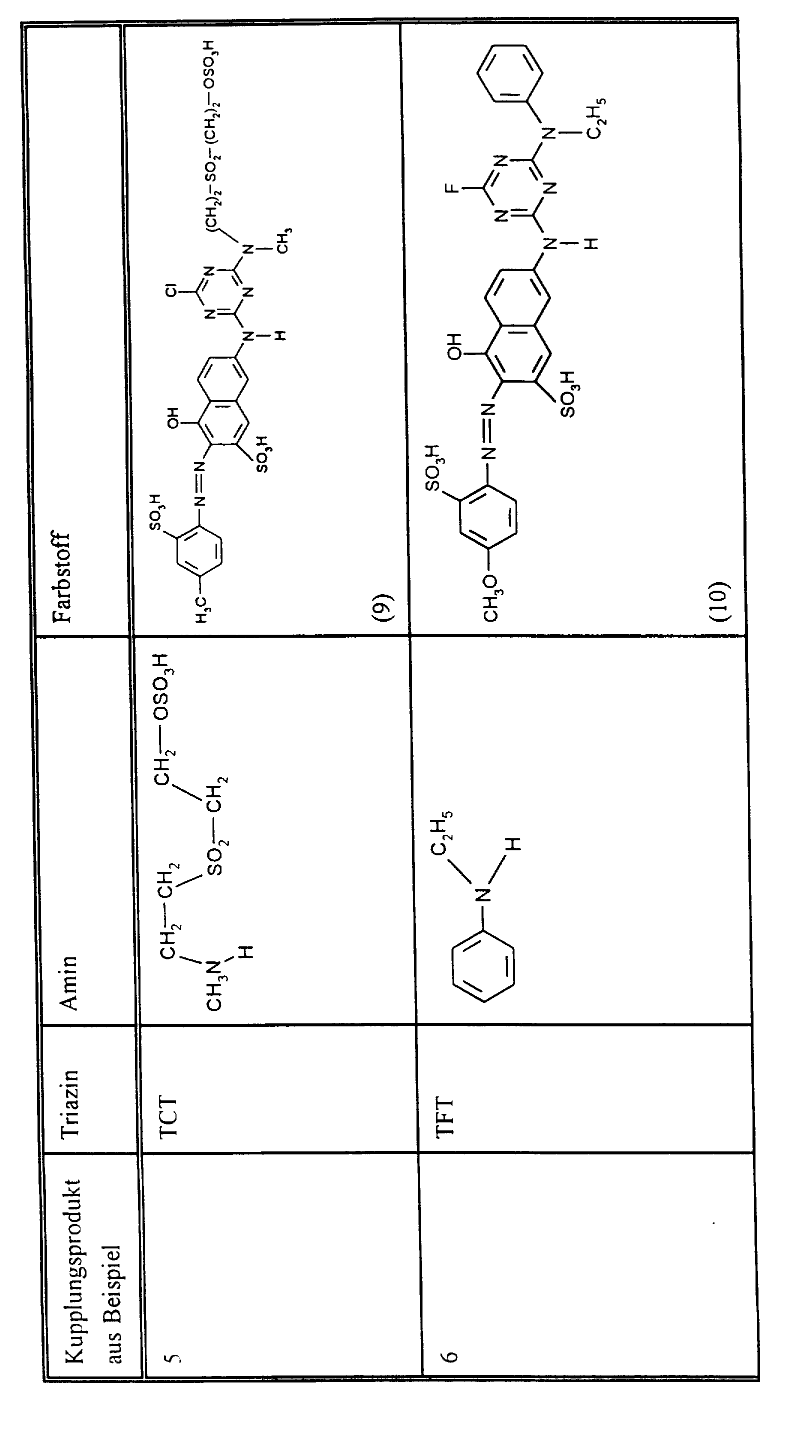

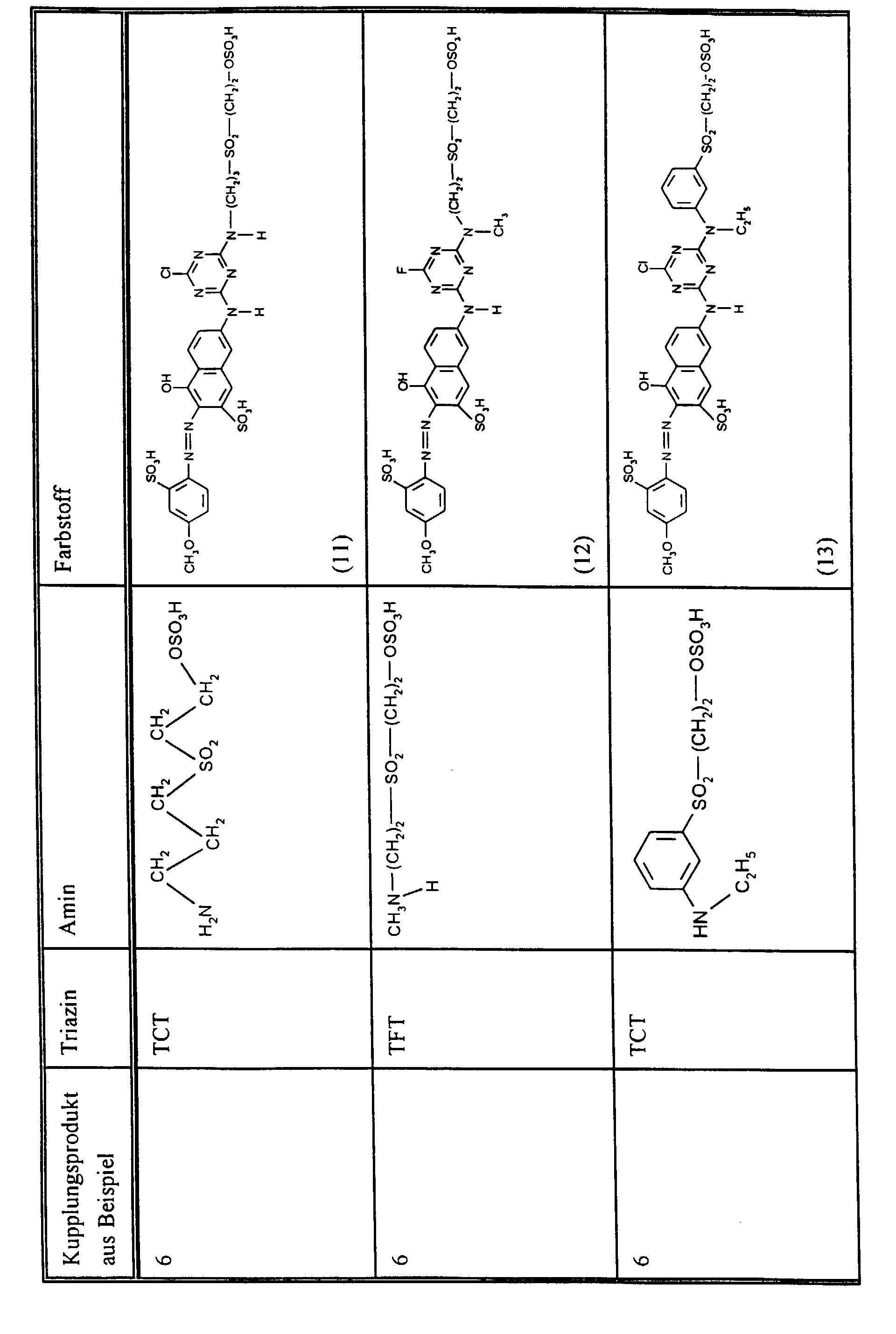

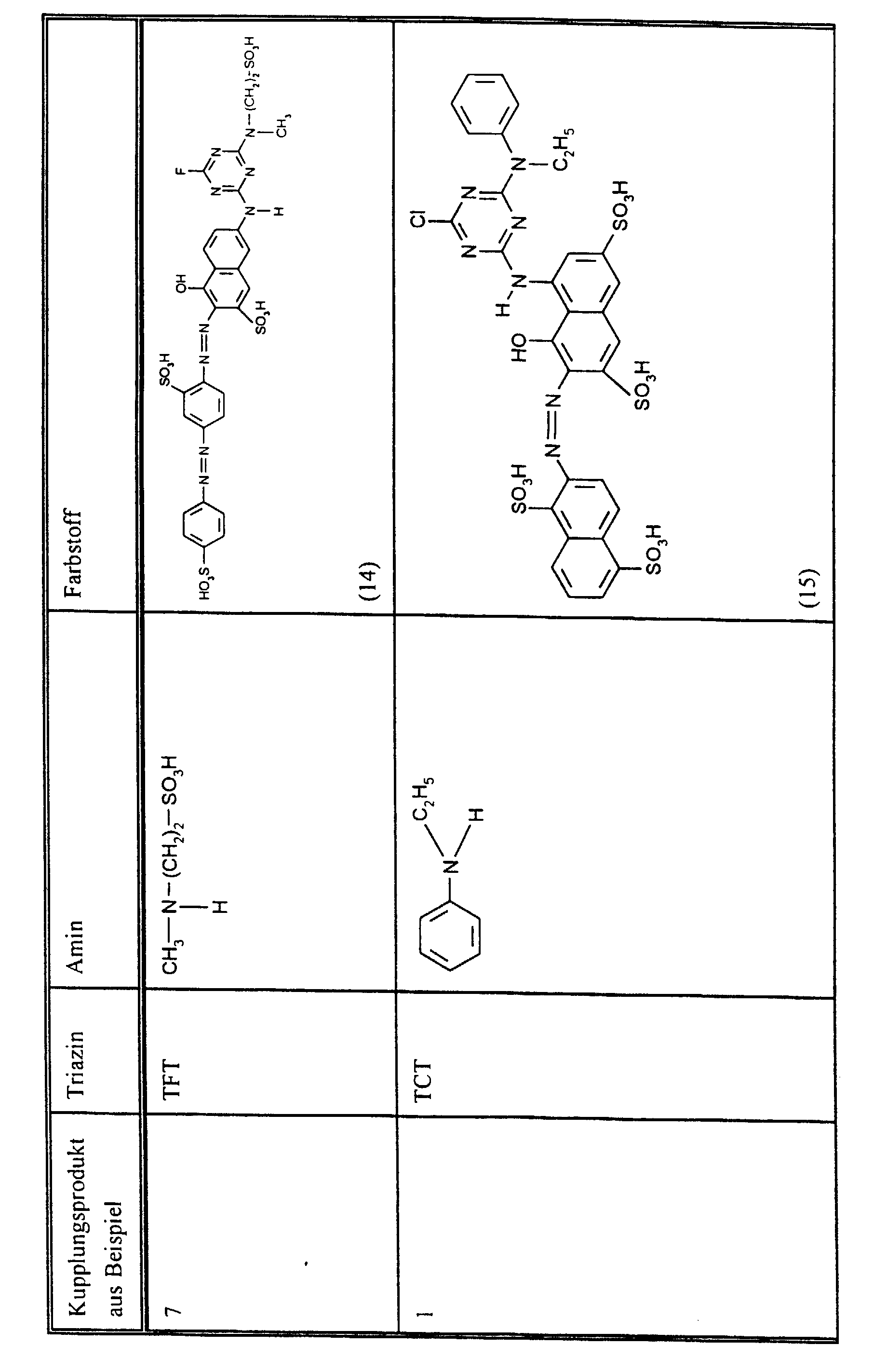

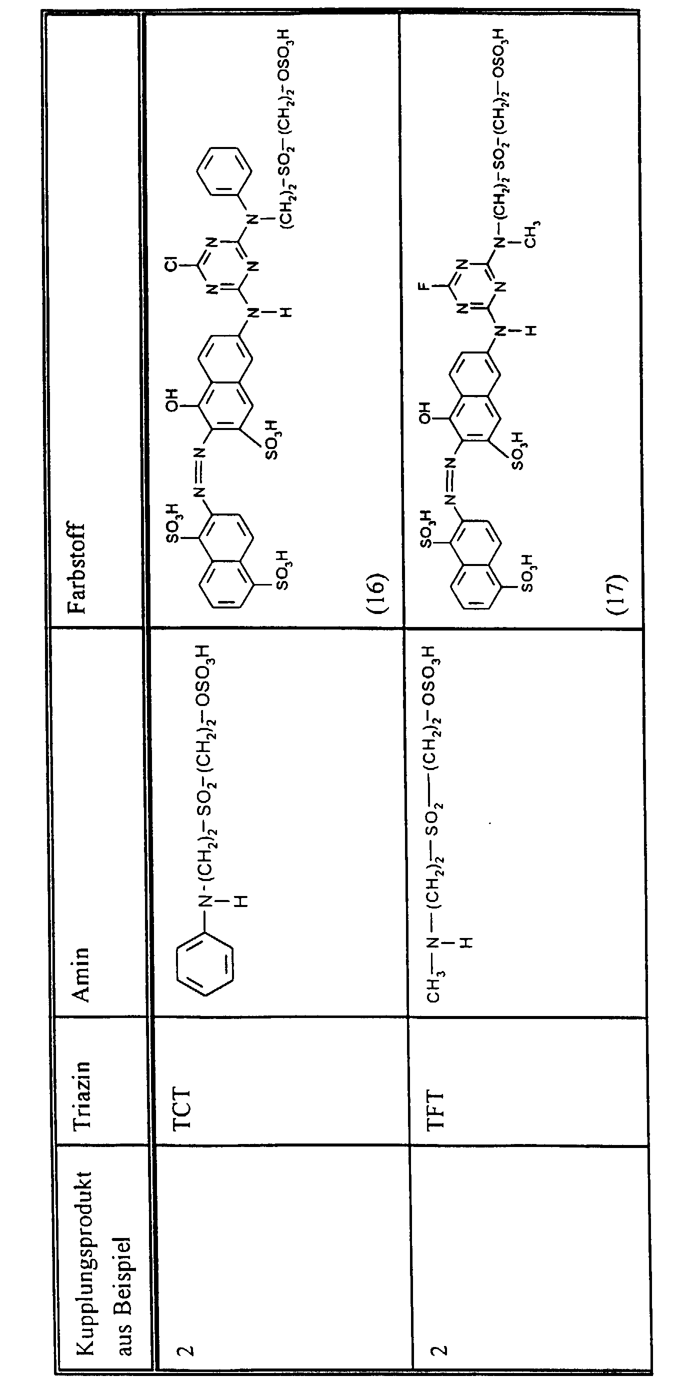

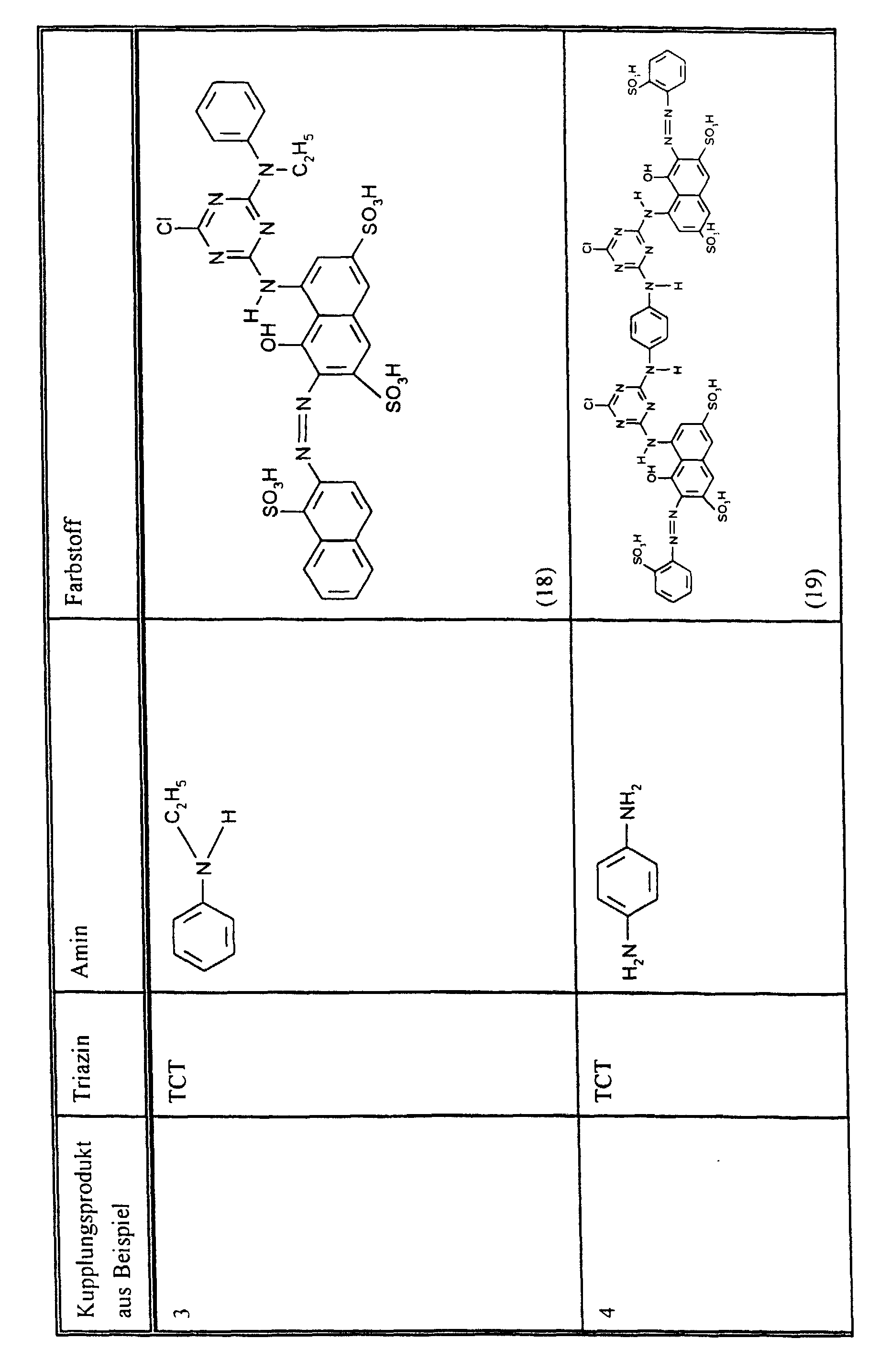

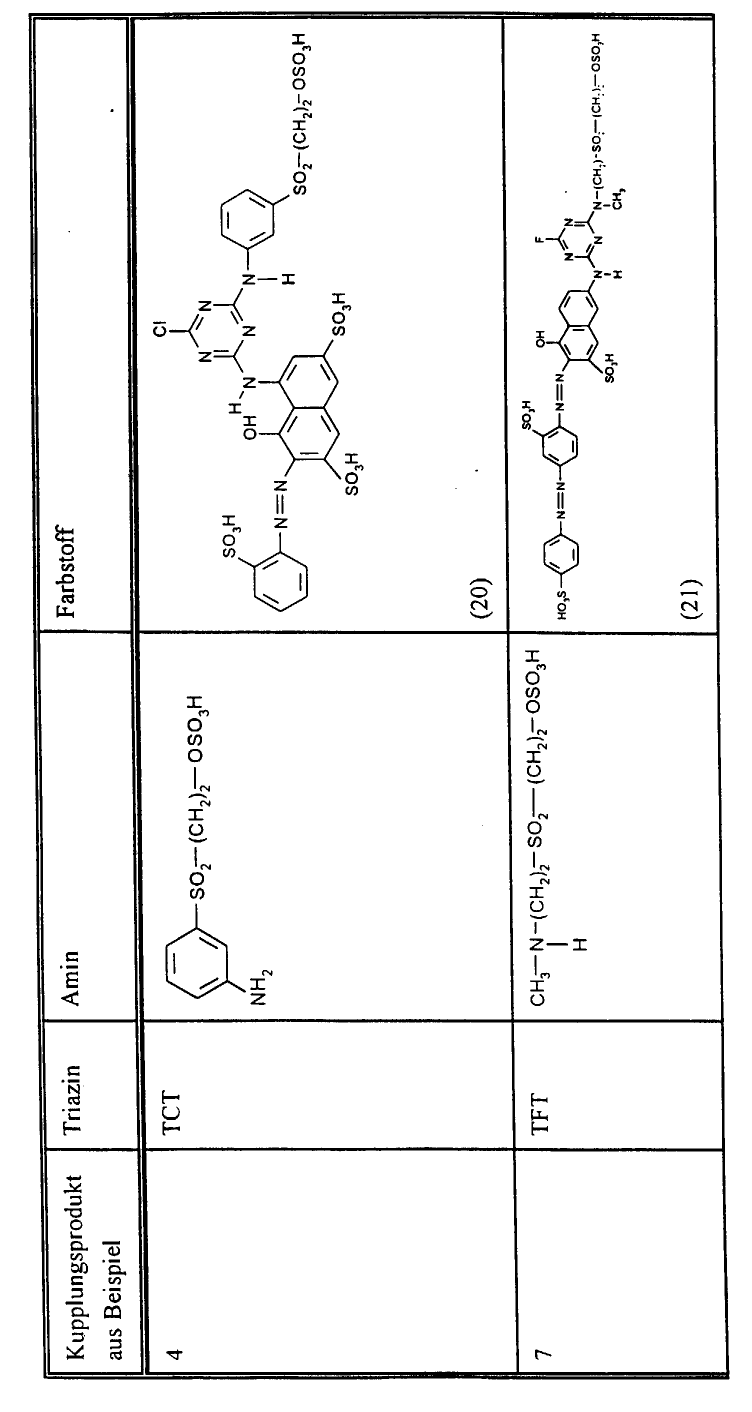

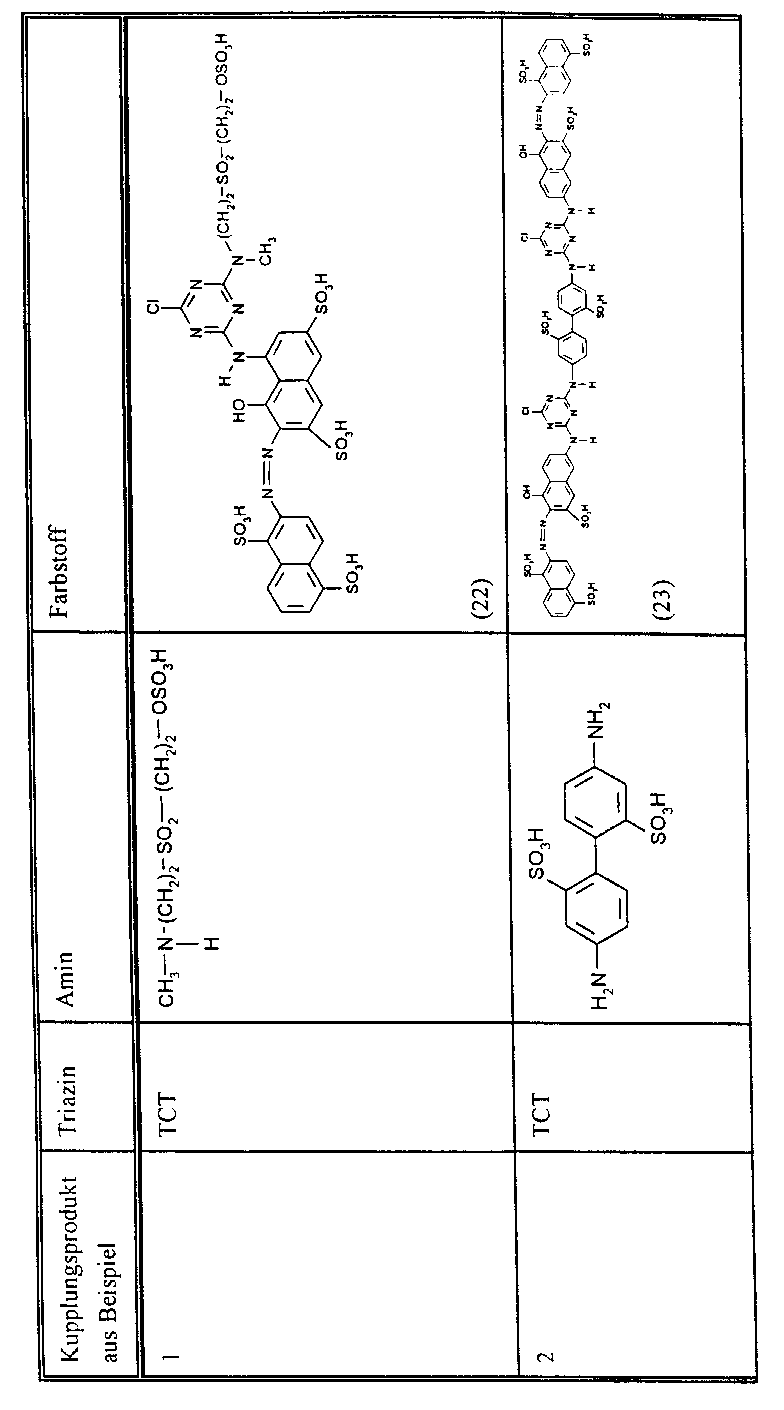

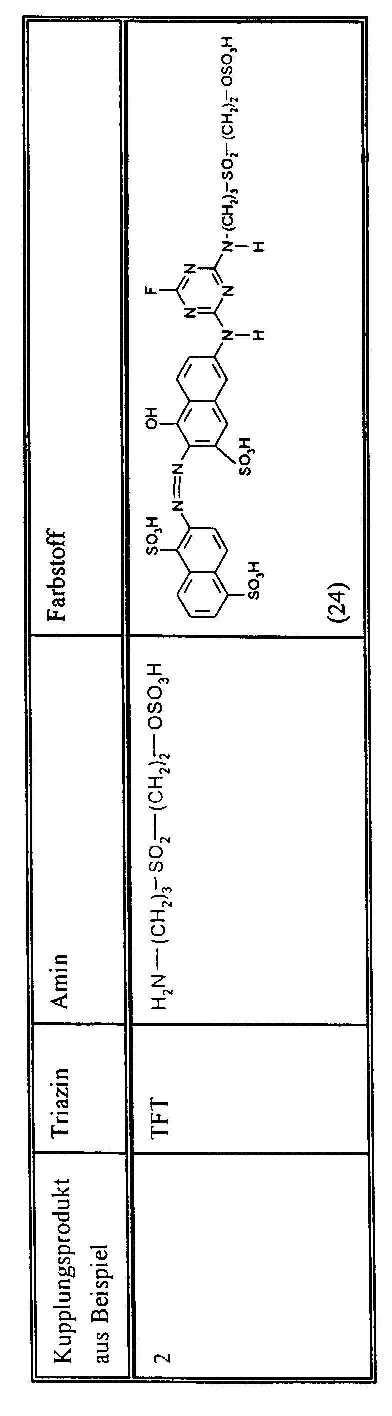

## Patentansprüche

1. Verfahren zur Herstellung von Verbindungen, die in Form ihrer freien Säure der Formel (I) entsprechen 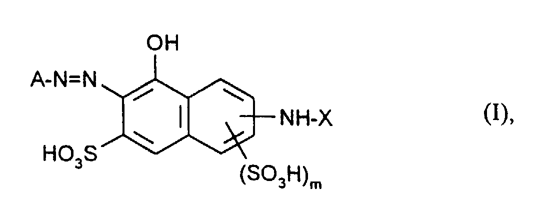 worin
m für 0 oder 1 steht,
A den Rest einer Diazokomponente bedeutet und
X einen faserreaktiven heterocyclischen Rest bedeutet,
dadurch gekennzeichnet, daß man maleinylierte Aminoazofarbstoffe der Formel (IV) 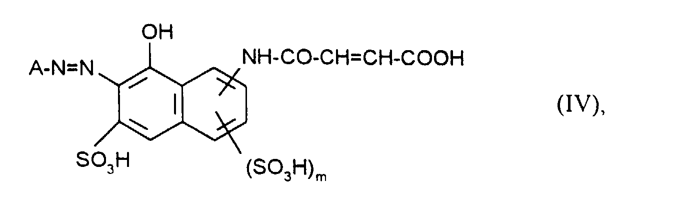 worin
A und m die obengenannte Bedeutung haben,
verseift und die dabei erhaltene Verbindung ohne Zwischenisolierung, mit einer Reaktivkomponente der Formel (VI)
X-Hal (VI)
umsetzt, wobei
X die oben angegebene Bedeutung besitzt und
Hal für Halogen, insbesondere Cl oder F, steht.

2. Verfahren gemäß Anspruch 1, dadurch gekennzeichnet, daß
A ein Benzolderivat der allgemeinen Formel (II) 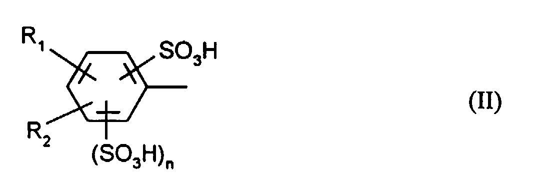
oder ein Naphthalinderivat der allgemeinen Formel (III) bedeutet, 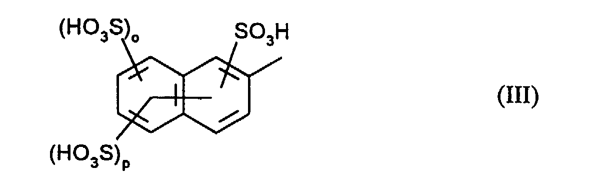 worin
R₁ und R₂ unabhängig voneinander für Wasserstoff, Halogen, C₁-C₄-Alkyl, C₁-C₄-Alkoxy, gegebenenfalls durch Substituenen wie Halogen, insbesondere F, Cl oder Br, C₁-C₄-Alkyl, C₁-C₄-Alkoxy oder SO₃H, substituiertes Arylazo, insbesondere Sulfophenylazo stehen,
n, o und p unabhängig voneinander für 0 oder 1 stehen.

3. Verfahren gemäß Anspruch 2, dadurch gekennzeichnet, daß
R₁ und R₂ unabhängig voneinander für Wasserstoff, Chlor, Fluor, Methyl, Ethyl, Methoxy, Ethoxy oder 4-Sulfophenylazo stehen.

4. Verfahren gemäß Anspruch 2, dadurch gekennzeichnet, daß
A ein Benzolderivat der Formel (II) bedeutet, das der Formel (VII) entspricht 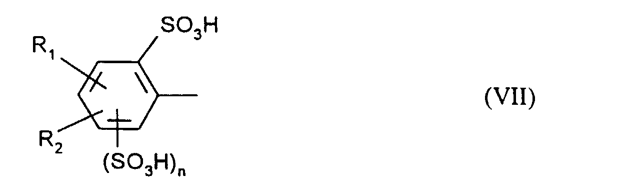
oder ein Naphthalinderivat der Formel (III) bedeutet, das der Formel (VIII) entspricht

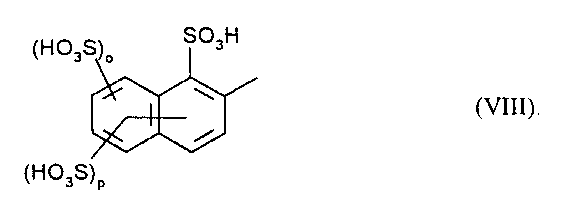

5. Verfahren gemäß Anspruch 1, dadurch gekennzeichnet, daß die Verbindungen der Formel (IV) der Formel (IX) oder (X) entsprechen 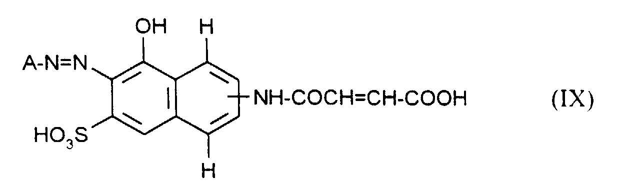 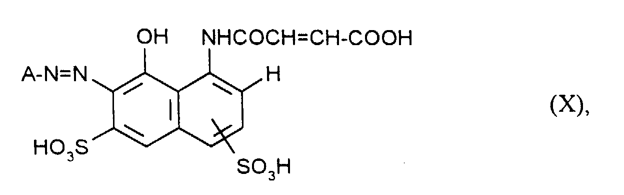 worin
A die in Anspruch 1 angegebene Bedeutung hat.

6. Verfahren gemäß Anspruch 1, dadurch gekennzeichnet, daß die Verseifung in wäßrig alkalischer Lösung oder in wäßrig-saurer Lösung bei einer Temperatur von 60 bis 105°C erfolgt.

7. Verfahren gemäß Anspruch 2, dadurch gekennzeichnet, daß die Verbindungen der Formel (IV) dadurch erhalten werden, daß man Verbindungen der Formel (XI) oder (XII) 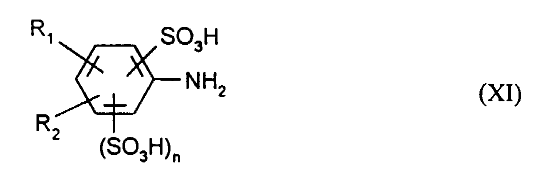 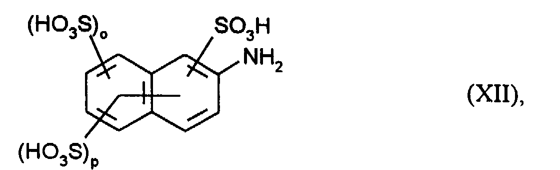 worin
R₁, R₂, n, o und p die in Anspruch 2 angegebene Bedeutung besitzen, diazotiert und auf Verbindungen der Formel (XIII) kuppelt 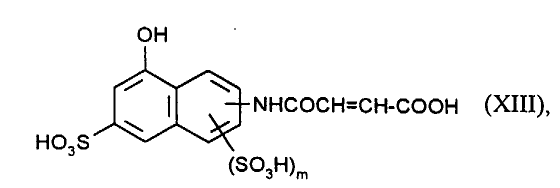 worin
m die oben angegebene Bedeutung besitzt.

8. Verfahren gemäß Anspruch 7, dadurch gekennzeichnet, daß die Verbindungen der Formel (XI) denen der Formel (XIa) entsprechen oder die Verbindungen der Formel (XII) denen der Formel (XIIa) entsprechen 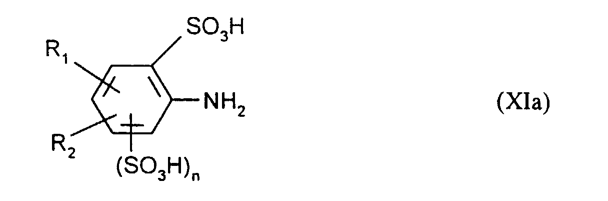 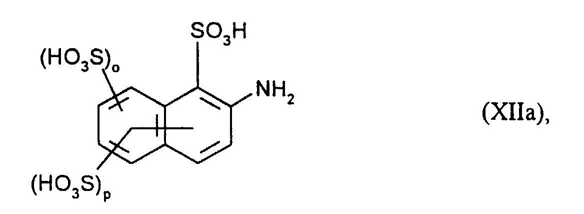 worin
R₁, R₂, n, o und p die in Anspruch 7 genannte Bedeutung haben.

9. Verfahren gemäß Anspruch 1, dadurch gekennzeichnet, daß als X-Hal eine Reaktivkomponente eingesetzt wird, deren Rest X mindestens einen reaktiven Substituenten an einen 5- oder 6-gliedrigen aromatisch-heterocyclischen Ring gebunden enthält.

10. Verfahren gemäß Anspruch 1, dadurch gekennzeichnet, daß als X-Hal eine Reaktivkomponente eingesetzt wird, deren Rest ein faserreaktiver Rest aus der Reihe der Pyrimidine oder der Triazine bedeutet.

11. Verfahren gemäß Anspruch 1 zur Herstellung von Verbindungen der Formel I, worin X für einen Rest der Formel 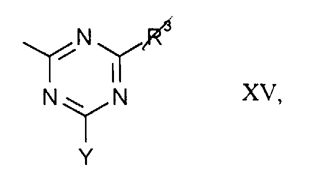 steht,
worin
Y für Cl oder F steht und
R₃ einen Rest eines aliphatischen oder aromatischen Amins bedeutet, der gegebenenfalls eine weitere Aminofunktion oder einen Rest der Formel -SO₂-C₂H₄-OSO₃H oder -SO₂CH=CH₂ enthält,
dadurch gekennzeichnet, daß man Verbindungen der Formel I, worin X für einen Rest der Formel XV steht und R₃ Cl oder F bedeutet, mit einem aliphatischen oder aromatischen Amin HR₃, das gegebenenfalls eine weitere Aminofunktion oder ein Rest der Formel -SO₂-C₂H₄-OSO₃H oder -SO₂CH=CH₂ enthält, umsetzt.

12. Verfahren gemäß Anspruch 11 zur Herstellung von Verbindungen der Formel 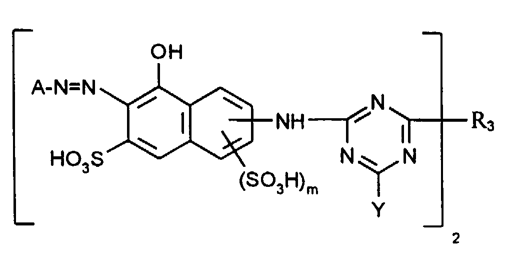 worin R₃ einen Diaminorest bedeutet, dadurch gekennzeichnet, daß das Amin HR₃ ein Diamin ist.

## Claims

1. Process for the preparation of compounds which, in the form of their free acid, correspond to the formula (I) 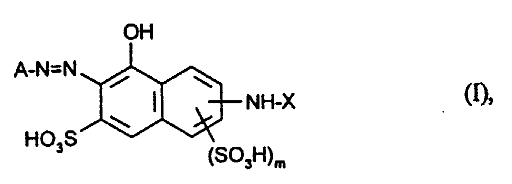 wherein
m denotes 0 or 1,
A denotes the radical of a diazocomponent and
X denotes a fibre-reactive heterocyclic radical,
characterized in that maleylated aminoazo dyestuffs of the formula (IV) 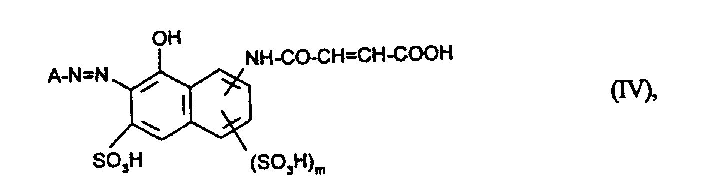 wherein
A and m have the abovementioned meaning,
are hydrolysed and the compound obtained by this reaction is reacted, without intermediate isolation, with a reactive component of the formula (VI)
X-Hal (VI)
wherein
X has the abovementioned meaning and
Hal represents halogen, in particular Cl or F.

2. Process according to Claim 1, characterized in that
A denotes a benzene derivative of the general formula (II) 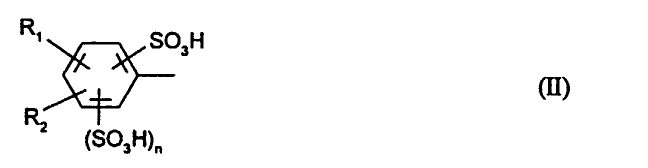
or a naphthalene derivative of the general formula (III) 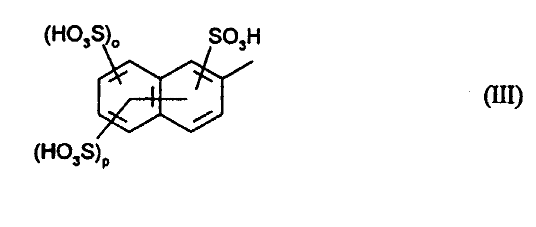 wherein
R₁ and R₂ independently of one another represent hydrogen, halogen, C₁-C₄-alkyl, C₁-C₄-alkoxy or arylazo which is optionally substituted by substituents such as halogen, in particular F, Cl or Br, C₁-C₄-alkyl, C₁-C₄-alkoxy or SO₃H, in particular sulphophenylazo, and
n, o and p independently of one another represent 0 or 1.

3. Process according to Claim 2, characterized in that
R₁ and R₂ independently of one another represent hydrogen, chlorine, fluorine, methyl, ethyl, methoxy, ethoxy or 4-sulphophenylazo.

4. Process according to Claim 2, characterized in that
A denotes a benzene derivative of the formula (II) which corresponds to the formula (VII) 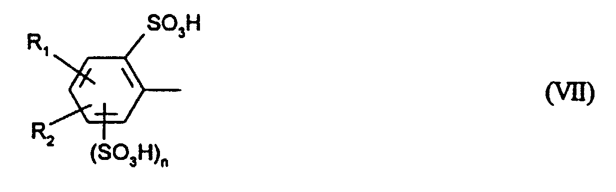
or denotes a naphthalene derivative of the formula (III) which corresponds to the formula (VIII)

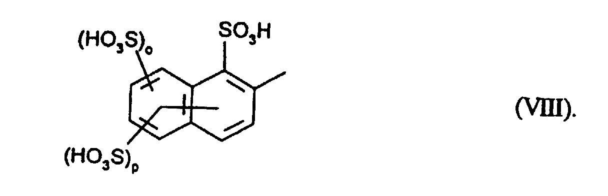

5. Process according to Claim 1, characterized in that the compounds of the formula (IV) correspond to the formula (IX) or (X) 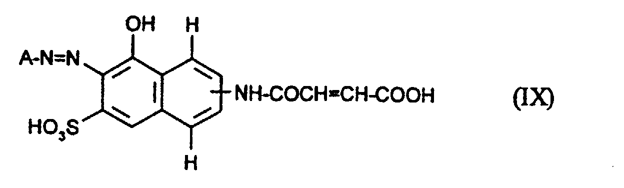 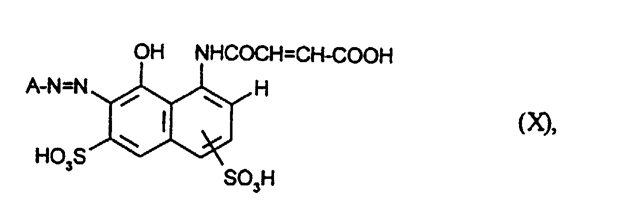 wherein
A has the meaning given in Claim 1.

6. Process according to Claim 1, characterized in that the hydrolysis is carried out in aqueous-alkaline solution or in aqueous-acid solution at a temperature of 60 to 105°C.

7. Process according to Claim 2, characterized in that the compounds of the formula (IV) are obtained by a procedure in which compounds of the formula (XI) or (XII) 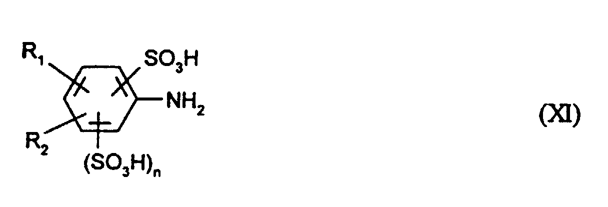 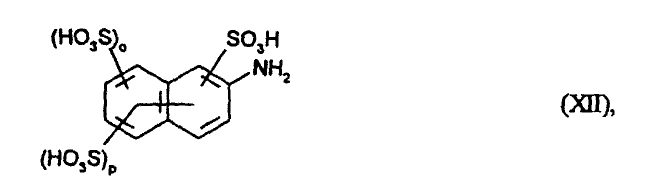 wherein
R₁, R₂, n, o and p have the meaning given in Claim 2,
are diazotized and the diazotization products are coupled to compounds of the formula (XIII) 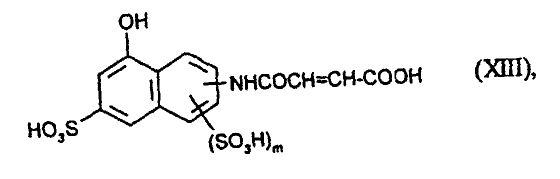 wherein
m has the abovementioned meaning.

8. Process according to Claim 7, characterized in that the compounds of the formula (XI) correspond to those of the formula (XIa) or the compounds of the formula (XII) correspond to those of the formula (XIIa) 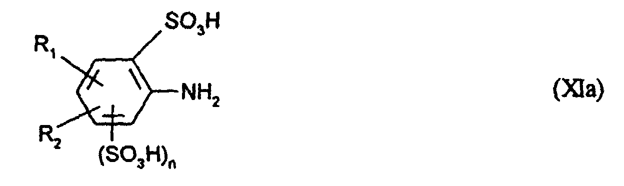 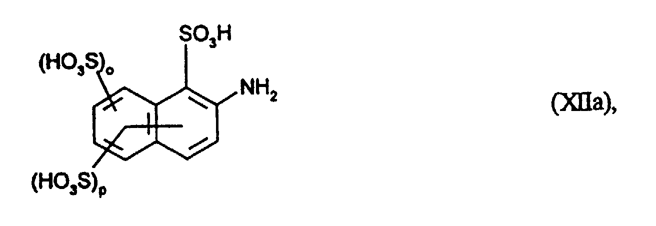 where
R₁, R₂, n, o and p have the meaning given in Claim 7.

9. Process according to Claim 1, characterized in that the component employed as X-Hal is a reactive component in which the radical X contains at least one reactive substituent bonded to a 5- or 6-membered aromatic heterocyclic ring.

10. Process according to Claim 1, characterized in that the component employed as X-Hal is a reactive component in which the radical X denotes a fibre-reactive radical from the series consisting of the pyrimidines or the triazines.

11. Process according to Claim 1 for the preparation of compounds of the formula I wherein X represents a radical of the formula 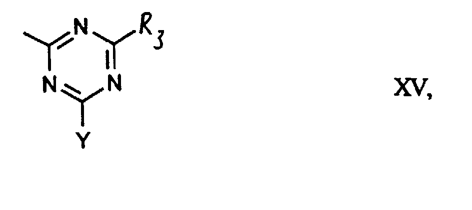 wherein
Y represents Cl or F and
R₃ denotes a radical of an aliphatic or aromatic amine which optionally contains a further amino function or a radical of the formula -SO₂-C₂H₄-OSO₃H or -SO₂CH=CH₂,
characterized in that compounds of the formula I wherein X represents a radical of the formula XV and R₃ denotes Cl or F are reacted with an aliphatic or aromatic amine HR₃ which optionally contains a further amino function or a radical of the formula -SO₂-C₂H₄-OSO₃H or SO₂CH=CH₂.

12. Process according to Claim 11 for the preparation of compounds of the formula 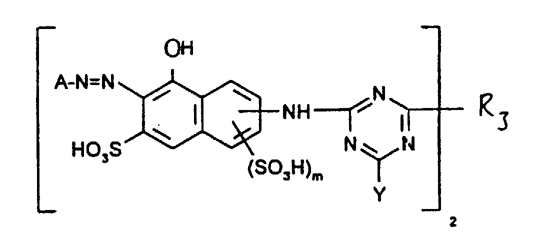
wherein R₃ denotes a diamino radical, characterized in that the amine HR₃ is a diamine.

## Revendications

1. Procédé pour la préparation de composés qui, à l'état d'acides libres, répondent à la formule (I) 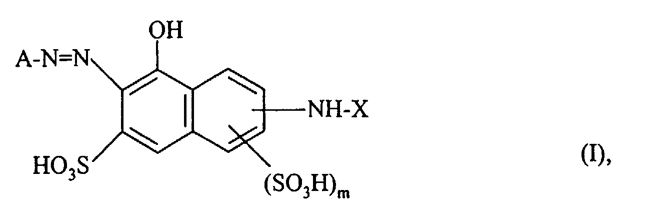 dans laquelle
m est égal à 0 ou 1,
A représente le radical d'un composant diazotable, et
X représente un radical hétérocyclique réactif avec les fibres,
caractérisé en ce que l'on saponifie des colorants aminoazoïques maléisés de formule (IV) 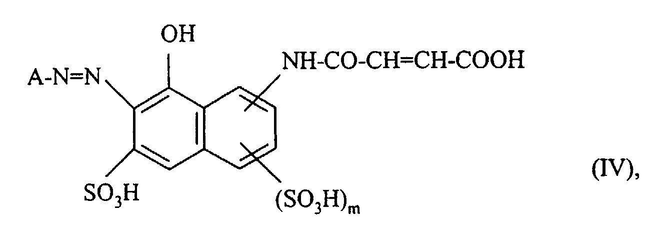 dans laquelle
A et m ont les significations indiquées ci-dessus,
puis on fait réagir le composé obtenu, sans l'isoler, avec un composant réactif de formule (VI)
X-Hal (VI)
dans laquelle
X a les significations indiquées ci-dessus et
Hal représente un halogène, plus particulièrement Cl ou F.

2. Procédé selon la revendication 1, caractérisé en ce que
A représente un dérivé benzénique de formule générale (II) 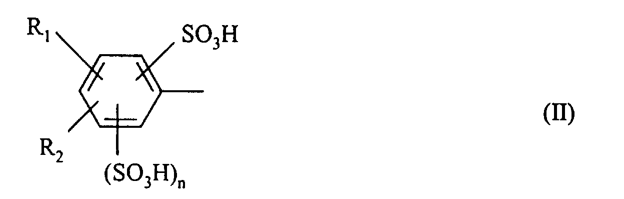 ou un dérivé naphtalénique de formule générale (III) 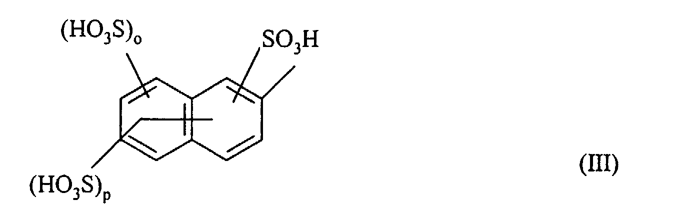 dans lesquelles
R₁ et R₂ représentent chacun, indépendamment l'un de l'autre, l'hydrogène, un halogène, un groupe alkyle en C₁-C₄, alcoxy en C₁-C₄, un groupe arylazo, plus spécialement sulfophénylazo, éventuellement substitué par un halogène, plus spécialement F, CI ou Br, un groupe alkyle en C₁-C₄, alcoxy en C₁-C₄ ou SO₃H, n, o et p sont égaux chacun , indépendamment les uns des autres, à 0 ou 1.

3. Procédé selon la revendication 2, caractérisé en ce que
R₁ et R₂ représentent chacun, indépendamment l'un de l'autre, l'hydrogène, le chlore, le fluor, un groupe méthyle, éthyle, méthoxy, éthoxy ou 4-sulfophénylazo.

4. Procédé selon la revendication 2, caractérisé en ce que
A représente un dérivé benzénique de formule (II) répondant plus particulièrement à la formule (VII) 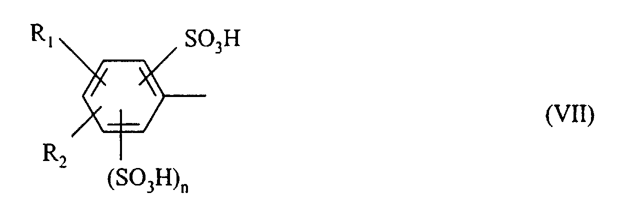
ou un dérivé naphtalénique de formule (III), répondant plus particulièrement à la formule (VIII)

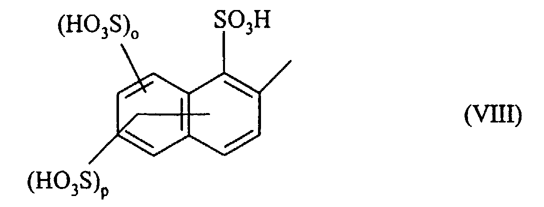

5. Procédé selon la revendication 1, caractérisé en ce que les composés de formule (IV) répondent à la formule (IX) ou à la formule (X) 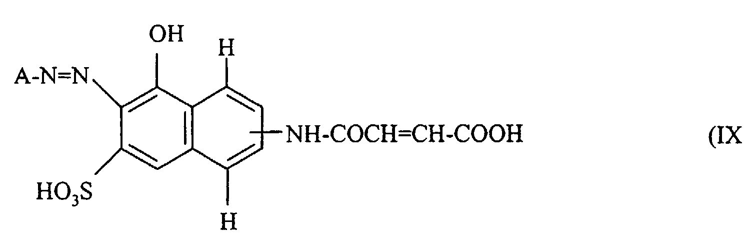 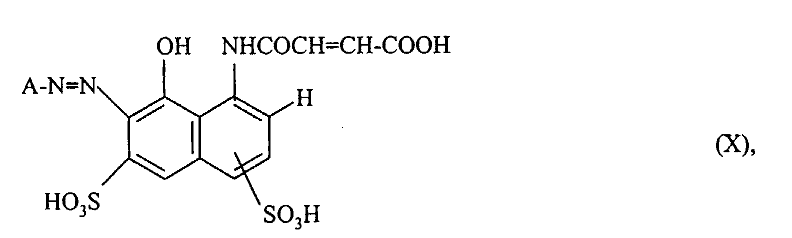 dans lesquelles
A a les significations indiquées dans la revendication 1.

6. Procédé selon la revendication 1, caractérisé en ce que la saponification est réalisée en solution aqueuse alcaline ou en solution aqueuse acide à des températures de 60 à 105°C.

7. Procédé selon la revendication 2, caractérisé en ce que l'on obtient les composés de formule (IV) en diazotant des composés de formule (XI) ou (XII) 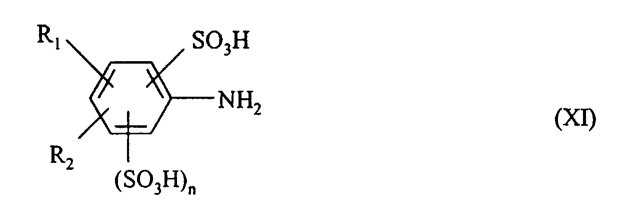 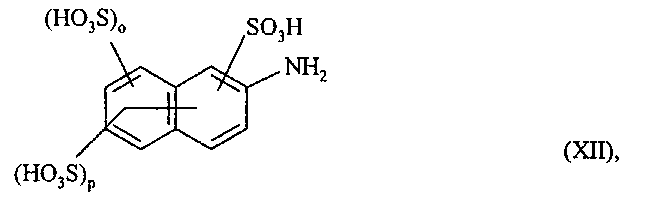 dans lesquelles
R₁, R₂, n, o et p ont les significations indiquées dans la revendication 2,
et on copule sur des composés de formule (XIII) 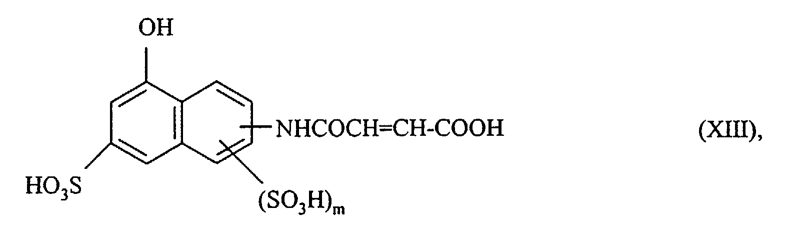
dans laquelle
m a les significations indiquées ci-dessus.

8. Procédé selon la revendication 7, caractérisé en ce que les composés de formule (XI) répondent plus particulièrement à la formule (XIa) ou bien les composés de formule (XII) répondent plus particulièrement à la formule (XIIa) : 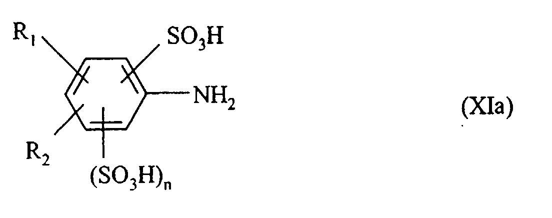 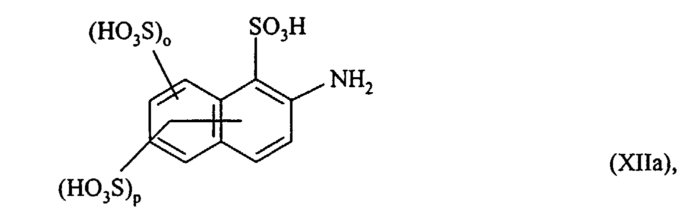 dans lesquelles
R₁, R₂, n, o et p ont les significations indiquées dans la revendication 7.

9. Procédé selon la revendication 1, caractérisé en ce que l'on utilise un composant réactif X-Hal pour lequel le radical X contient au moins un substituant réactif fixé sur un noyau aromatique-hétérocyclique à 5 ou 6 chaînons.

10. Procédé selon la revendication 1, caractérisé en ce que l'on utilise un composant réactif X-Hal dont le radical est un radical réactif avec les fibres de la classe des pyrimidines ou des triazines.

11. Procédé selon la revendication 1, pour la préparation des composés de formule (I) dans laquelle dans X représente un groupe de formule 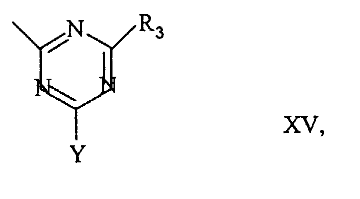 dans laquelle
Y représente Cl ou F et
R₃ représente un radical d'une amine aliphatique ou aromatique contenant le cas échéant une autre fonction amino ou un radical de formule -SO₂-C₂H₄-OSO₃H ou -SO₂CH = CH₂,
caractérisé en ce que l'on fait réagir des composés de formule (I) dans laquelle X représente un radical de formule (XV) et Y représente Cl ou F, avec une amine aliphatique ou aromatique HR₃ portant le cas échéant une autre fonction amino ou un radical de formule -SO₂-C₂H₄-OSO₃H ou -SO₂CH = CH₂.

12. Procédé selon la revendication Il, pour la préparation de composés de formule 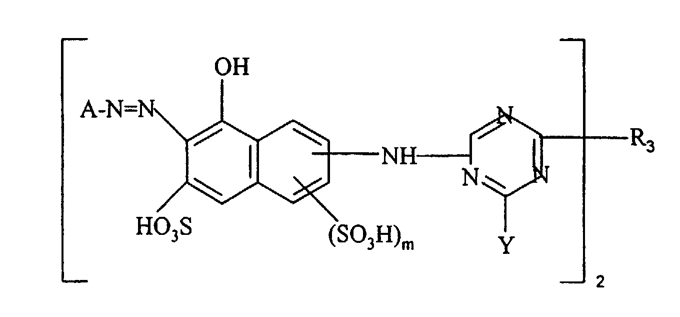 dans laquelle R représente un groupe diamino, caractérisé en ce que l'amine HR et une diamine.
